# EUROPEAN PATENT APPLICATION

(11) **EP 3 819 593 A1**
(43) Date of publication of application: **12.05.2021**
(21) Application number: 19814987.4
(22) Date of filing: 31.05.2019
(51) Int. Cl.: G01C 21/20, G01C 17/32, G01C 21/36

(54) **INDOOR DIRECTION GUIDING METHOD AND SYSTEM THEREFOR**

(30) Priority: 08.06.2018 KR 20180066074
(71) Applicant: Korea National University of Transportation Industry Academic Cooperation Foundation, Chungju-si, Chungcheongbuk-do 27469 (KR)
(72) Inventor: KIM, Hyun, Seoul 07651 (KR); YANG, Ki-Hyuk, Seoul 06522 (KR)
(74) Representative: HGF
(86) International application number: PCT/KR2019/006610
(87) International publication number: WO 2019/235786

(57) **Abstract**

There is disclosed a direction guiding method including acquiring information on an arrival location to be reached by a passer-by, recognizing a marker on which identifying information is recorded by photographing the marker, outputting a direction in which the passer-by is to move for the passer-by to move to the arrival location, and displaying the photographed first marker on a display unit. According to the method, a route guidance technology may be provided that is capable of quickly, easily, and accurately constructing a destination even indoors where GPS signals do not arrive.

## Description

### TECHNICAL FIELD

The present invention relates to a technology for guiding a person to a destination using a portable user device and a server in a space where GPS is not operated.

### BACKGROUND ART

Navigation devices that operate outdoors operate using GPS signals from GPS satellites. However, since GPS signals are not transmitted strong enough to reach indoors, it is difficult to use a vehicle navigation program indoors.

In order to overcome the above-mentioned problem, advanced technologies such as the WiFi fingerprint method and the geomagnetic fingerprint method have been introduced; however, the technologies are expensive to implement and are still unreliable.

There are many indoor spaces that have complex routes but do now allow GPS signals to enter, such as subway transit stations and complex shopping malls. In fact, in buildings with complex indoor structures, there is a problem that passers-by/travelers, regardless of age or gender, may not accurately find a trip/movement route. In particular, in transit subway stations, and the like, requiring fast movement, the delay time taken to search for such a trip route may cause personal or social losses.

### DISCLOSURE OF THE INVENTION

### TECHNICAL PROBLEM

The present invention provides a route guidance technology capable of quickly, easily, and accurately constructing a route to a destination even indoors where GPS signals do not arrive.

### TECHNICAL SOLUTION

According to an aspect of the present invention, there may be provided a direction guiding method including: acquiring, by a user device, information on a first arrival location to be reached by a passer-by; recognizing, by the user device, a first marker on which identifying information is recorded by photographing the first marker; and outputting, by the user device, a first direction in which the passer-by is to move for the passer-by to move to the first arrival location.

Further, the direction guiding method may further include displaying the photographed first marker on a display unit.

Further, the user device may be configured to, in the outputting of the first direction, present the first direction together with the photographed first marker as a reference, present the first direction together with east, west, north, and south direction information, or present the first direction based on a third reference direction.

Further, the user device may be configured to output information on the first direction on the display unit as a video signal, or output the information on the first direction as an audio signal.

Further, identifiers of a plurality of markers, identifiers of a plurality of arrival locations to be reachable by the passer-by, and marker-arrival location combination information (T1) on a plurality of directions allocated for combinations of each of the markers and each of the arrival locations may be stored in a storage unit of the user device, during at least a portion of a time in which the direction guiding method is performed.

Further, the outputting of the first direction may include: searching for a direction corresponding to the combination of the first marker and the first arrival location among the plurality of directions included in the marker-arrival location combination information; and determining the searched direction as the first direction.

Further, the first marker may have a shape in which a unique reference direction is definable, and the outputting of the first direction may include: determining a reference direction of the first marker; and displaying the first direction together with the first marker based on the determined reference direction.

Further, the user device may perform a compass function, and the outputting of the first direction may include displaying the first direction based on a predetermined reference direction among east, west, north, and south.

According to another aspect of the present invention, there may be provided a generation method for a trip route history of a passer-by, the generation method including: acquiring, by a user device, information on a first arrival location to be reached by a passer-by; performing a direction guiding process on a plurality of different markers, the direction guiding process being performed by the user device for recognizing a marker on which identifying information is recorded by photographing the marker, transmitting, to a server, marker information which is information on the marker, and outputting a first direction in which the passer-by is to move for the passer-by to move to the first arrival location; and generating, by the server, a trip route history of the passer-by by using the marker information on a plurality of markers received from the user device.

### ADVANTAGEOUS EFFECTS

According to the present invention, a route guidance technology may be provided that is capable of quickly, easily, and accurately constructing a destination even indoors where GPS signals do not arrive.

### BRIEF DESCRIPTION OF THE DRAWINGS

FIG. 1 illustrates an example of a shape of a marker attached to an indoor floor or wall according to an embodiment of the present invention.
FIGS. 2 and 3 illustrate examples of spaces to which the marker may be attached, which are diagrams of a subway platform provided on a second basement level, and a subway waiting room provided on a first basement level and destination locations and exits existing on the ground, respectively.
FIG. 3 illustrates structures and human traffics in the subway waiting room provided on the first basement level.
FIG. 4 illustrates subway gates and various locations existing on the ground.
FIG. 5 illustrates an example of information expressed by a direction guiding program provided according to an embodiment of the present invention when the marker installed on the floor is photographed with a camera of a user device.
FIG. 6 illustrates a state of being expressed on a user device when the marker is photographed in a randomly rotated direction from a reference direction.
FIGS. 7 and 8 illustrate the marker attached to an indoor floor and guidelines taped around the marker.
FIG. 9 is a diagram illustrating a scenario according to an embodiment of the present invention in which a passer-by who gets off from a subway to a platform drives a direction guiding program installed on his or her user device according to an embodiment of the present invention and receives guidance to a destination.
FIGS. 10 to 12 illustrate a process of the passer-by finding a subway gate to go out while photographing the markers, based on the contents illustrated in FIGS. 2 to 4.
FIG. 13 illustrates information exchanged by communication between a user device and a server according to an embodiment of the present invention.
FIG. 14 illustrates information exchanged by communication between a user device and a server according to another embodiment of the present invention.
FIG. 15 is a flowchart illustrating a method of performing direction guidance by a direction guiding program of a user device and a method of storing a passer-by passage history, according to an embodiment of the present invention.
FIG. 16 illustrates an example of a table referred to by a user device to express a direction guiding arrow to be superimposed on a marker image, according to an embodiment of the present invention.
FIG. 17 illustrates the marker illustrated in FIG. 3 and three guidelines connected thereto.
FIG. 18 is a diagram illustrating that a server may store a trip route history of each passer-by as a table, according to an embodiment of the present invention.

### MODE FOR CARRYING OUT THE INVENTION

Hereinafter, embodiments of the present invention will be described with reference to the drawings. However, the present invention is not limited to the embodiments described herein, and may be implemented by various modifications. The terms used herein are intended to aid understanding of the embodiments, and are not intended to limit the scope of the present invention. In addition, the singular forms used hereinafter include plural forms unless otherwise clearly expressed.

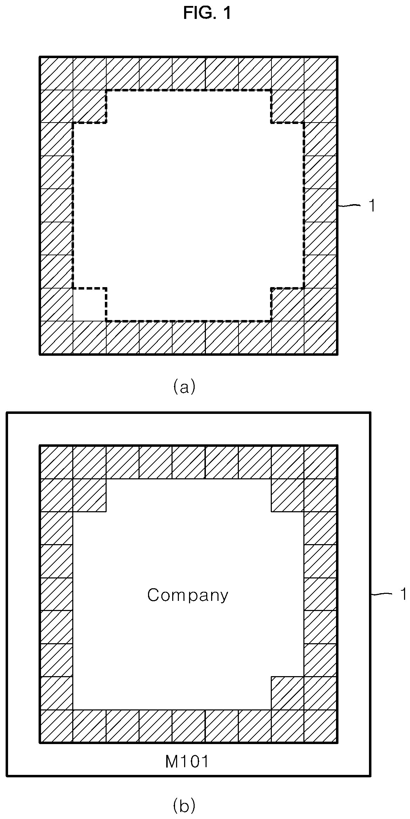

FIG. 1 illustrates an example of a shape of a marker attached to an indoor floor or wall according to an embodiment of the present invention.

A marker 1 may preferably be attached to the floor.

In the marker 1, information that is able to be decoded by a computing device may be encoded in a form that is able to be detected by a human eye or a camera. For example, as shown in FIG. 1, the information may be encoded in a form similar to a 2D barcode. For the marker 1, for example, the principle of a QR code may be used as it is, but a marker provided by a newly developed arbitrary coding rule may be used. The marker shown in FIG. 1 is only an embodiment, and even if a marker having another arbitrary shape is developed and used, there is no problem in the implementation of the present invention.

As shown in (A) of FIG. 1, the marker 1 may be made of a set of rectangular tiles arranged in a matrix form. The edge boundary of the set may have a rectangular shape. Each tile may be of one of two types. A first type is filled in the shape of a first pattern, and a second type is filled in the shape of a second pattern.

For example, the first pattern may be black or green, and the second pattern may be white.

All tiles arranged on the edge of the set may be referred to as edge tiles. The edge tiles may be filled in the first pattern all the time.

The inner edge portions of the edge tiles may have a rectangular shape and may have four corners. The pattern applied to the three corner tiles existing at three of the four corners may be different from the pattern applied to the corner tile existing at the remaining one corner.

For example, as shown in (A) of FIG. 1, the corner tiles existing in the upper left, upper right, and lower right of the four corners are filled in the first pattern all the time, and the corner tiles existing in the lower left of the four corners are may always be filled in the second pattern all the time. In this way, a directivity can be given to the marker 1, and this directivity may be decoded by the computing device. This is similar to that applied to the QR code.

As shown by a dotted line in (A) of FIG. 1, in an inner space excluding the edge tiles and the four corner tiles, inner tiles may be arranged to have a pattern according to a predetermined rule. The information encoded in the marker 1 is different depending on the arrangement of the inner tiles, and thus each marker 1 may be identified from other markers. That is, information for identifying the marker is encoded in each marker 1.

As shown in (B) of FIG. 1, a separate mark may be printed on a fixed position in the central portion of the marker 1. In addition, a separate shape or letter may be printed outside of the edge tiles of the marker 1. Such a print symbol may be made suitable for a person to intuitively recognize the direction of the marker.

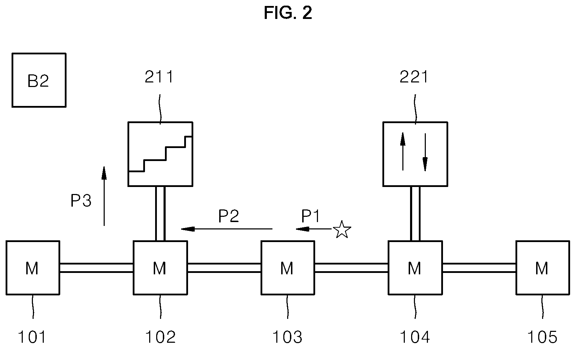

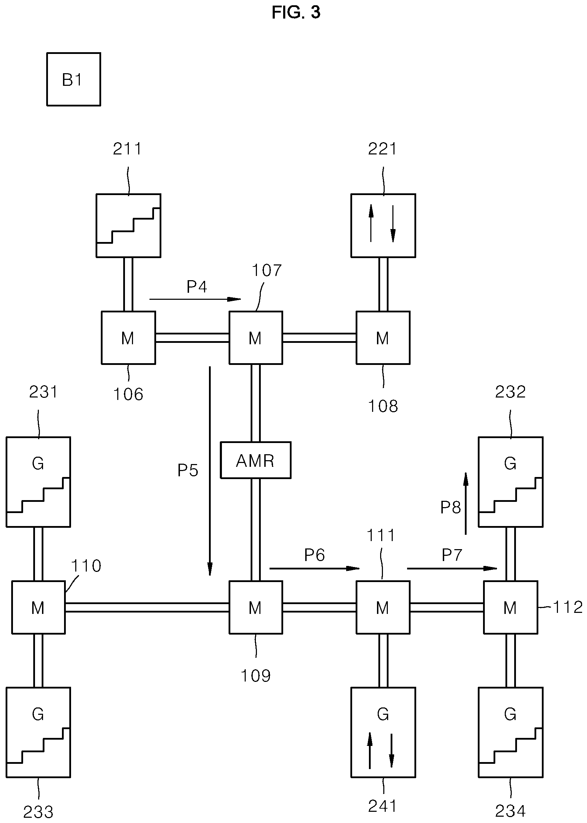

FIGS. 2 and 3 illustrate examples of spaces to which the marker may be attached, which are diagrams of a subway platform provided on a second basement level, and a subway waiting room provided on a first basement level and destination locations and exits existing on the ground.

FIG. 2 illustrates structures and human traffics on the subway platform provided on a second basement level B2.

FIG. 3 illustrates structures and human traffics in the subway waiting room provided on a first basement level B1.

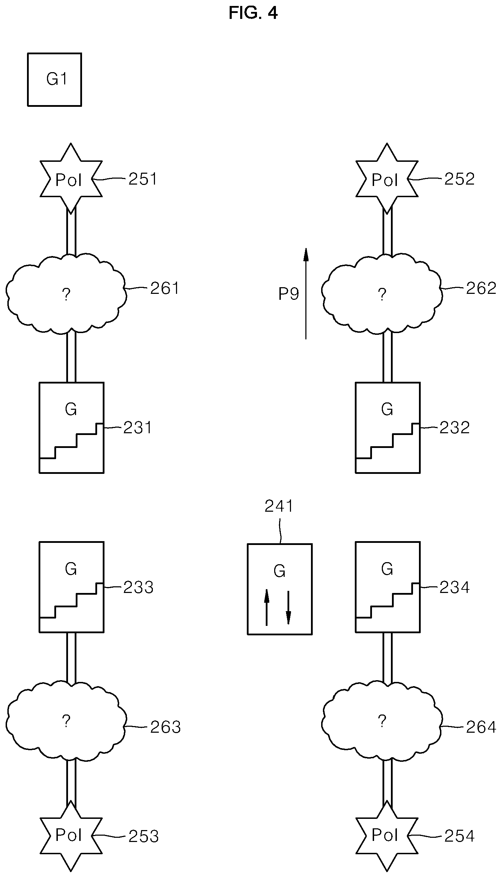

FIG. 4 illustrates subway gates and various locations existing on a ground G1.

Hereinafter, description will be made with reference to FIGS. 2 to 4 together.

Letters M presented by reference numerals 101 to 112 illustrated in FIGS. 2 and 3 denote the markers attached to the floor.

A symbol presented by reference numeral 211 illustrated in FIGS. 2 and 3 denotes stairs.

Symbols presented by reference numerals 221 and 241 illustrated in FIGS. 2 to 4 denote elevators.

Symbols presented by reference numerals 231, 232, 233, and 234 illustrated in FIGS. 3 and 4 denote subway gates, which are entrances connecting the ground and the underground space for subways.

A symbol presented by reference sign AMR illustrated in FIG. 3 denotes an automatic subway fare receiving and blocking device.

Arrows P1 to P9 illustrated in FIGS. 2 to 4 are routes through which a passer-by who has gotten off the subway moves from the place where the passer-by has gotten off to the destination, and show examples of the route guided by the system according to the present invention.

An asterisk shown in FIG. 2 denotes the location of the passer-by on the platform immediately after the passer-by gets off the subway, and a point of interest (PoI) presented by reference numeral 252 illustrated in FIG. 4 denotes the destination of the passer-by.

In FIG. 4, not only the destination 252, but also other positions 251, 253, and 254 that other people may make as destinations are displayed together.

The routes from the subway gates 231, 232, 233, and 234 to the destinations 251, 252, 253, and 254 may be expressed on a map including various information. In FIG. 4, such a complex map is simply replaced with a question mark and a cloud icon.

The doubled lines illustrated in FIGS. 2 and 3 may be imaginary lines connecting markers, stairs, and elevators to each other, or may be guidelines that are actually displayed on the floor.

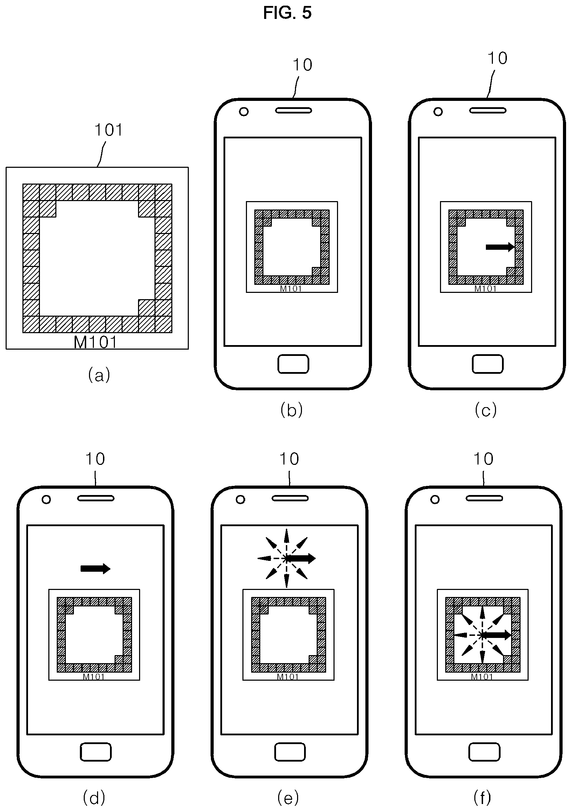

FIG. 5 illustrates an example of information expressed by a direction guiding program provided according to an embodiment of the present invention when a marker 101 installed on the floor is photographed with a camera of a user device.
(A) of FIG. 5 is the appearance when the marker 101 attached to the floor is viewed vertically from top to bottom with the naked eye.
(B) of FIG. 5 illustrates a form expressed on a screen when the marker 101 is photographed with a general camera application program.
(C) to (F) of FIG. 5 illustrate various examples of shapes expressed on a screen when the direction guiding program provided according to an embodiment of the present invention photographs the marker 101.

In (C) to (F) of FIG. 5, not only the actual photographed image of the marker 101, but also a superimposing solid arrow may be displayed, which indicates in which direction the movement is to be performed based on the marker for the passer-by to get to the destination.

In the example of (C) of FIG. 5, the solid arrow is displayed by being superimposed on the marker 101.

In the example of (D) of FIG. 5, the solid arrow is displayed on the outside of the marker 101.

In the example of (E) of FIG. 5, the solid arrow indicating the recommended movement direction is displayed on the outside of the marker 101 together with eight dotted arrows indicating possible movement directions.

In the example of (F) of FIG. 5, the solid arrow indicating the recommended movement direction is displayed by being superimposed on the marker 101 together with eight dotted arrows indicating possible movement directions.

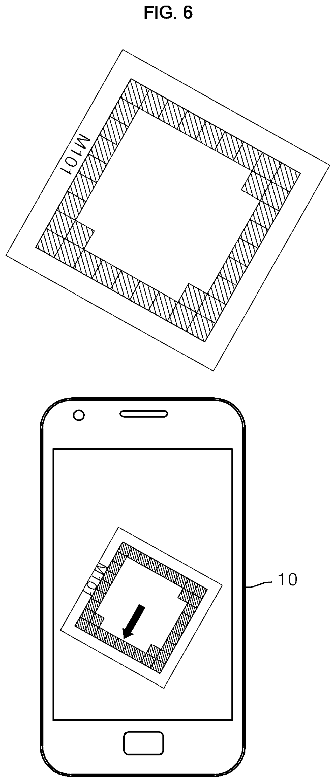

FIG. 6 illustrates a state of being expressed on the user device when the marker 1 is photographed in a randomly rotated direction from the reference direction. FIG. 6 illustrates an example in which the direction in which the passer-by approaches the marker 1 is changed in the example displayed as illustrated in (C) of FIG. 5. In a user device 10 provided according to an embodiment of the present invention, when the marker 1 is displayed with the shape thereof being rotated, the solid arrow is also displayed with the shape thereof being rotated.

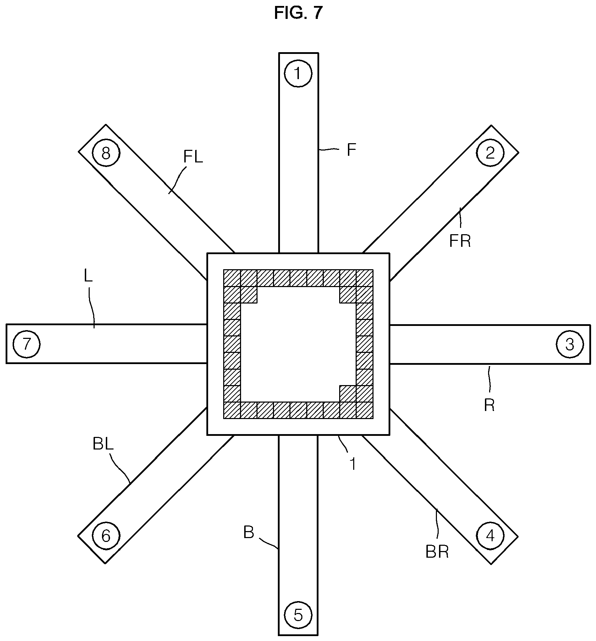

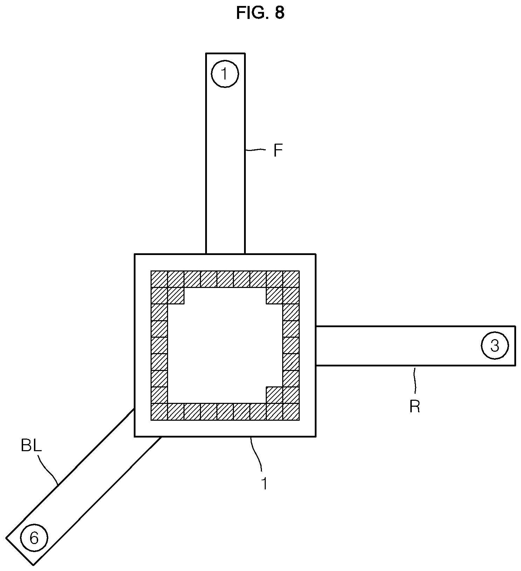

FIGS. 7 and 8 illustrate the marker 1 attached to an indoor floor and guidelines taped around the marker 1.

In one marker, one or more guidelines may be connected around the marker. Determination as to whether how many guidelines are connected around the marker in which direction may be made according to a method predetermined by the layout of the indoor space where the marker is installed, or may be made arbitrarily by the designer of the marker or the guidelines.

In the example of FIG. 7, guidelines are connected in 8 directions around the marker 1. The guidelines are assigned a forward (F) direction, a backward (B) direction, a left (L) direction, a right (R) direction, and directions in between them (FL, FR, BL, BR), respectively, based on the reference direction of the marker. In the example of FIG. 7, the reference direction of the marker is a direction from bottom to top. The forward direction is the same as the reference direction.

In the example of FIG. 8, guidelines are connected in 3 directions around the marker 1. The guidelines are assigned a forward (F) direction, a right (R) direction, and a left backward (BL) direction, respectively, based on the reference direction of the marker.

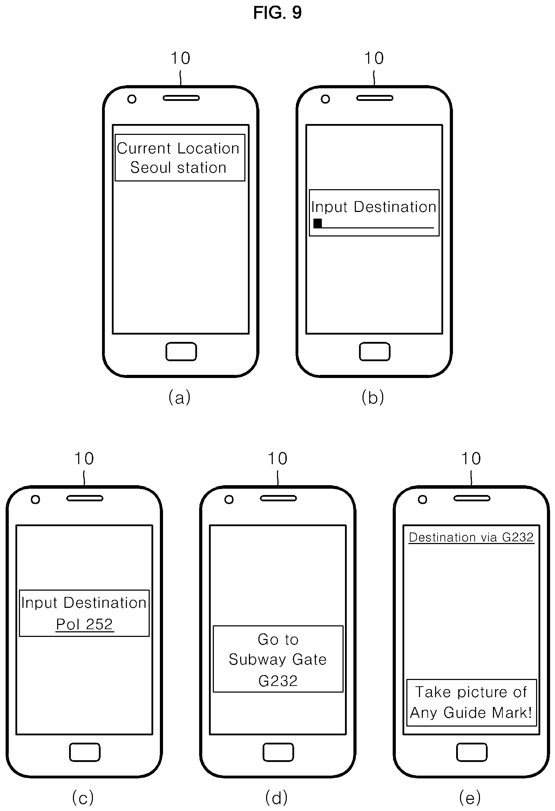

FIG. 9 is a diagram illustrating a scenario according to an embodiment of the present invention in which a passer-by who gets off a subway to a platform drives a direction guiding program installed on his or her user device (smartphone) according to an embodiment of the present invention and receives guidance to a destination.

First, the passer-by gets off the subway to the platform. For example, the passer-by may get off at a point marked with the asterisk illustrated in FIG. 2.

Then, as illustrated in (A) of FIG. 9, the user device 10 may express the current approximate location on the screen ("CURRENT LOCATIONS/SEOUL STATION"). For example, the fact may be expressed that the subway station where the passer-by has gotten off is the A station (e.g., "SEOUL STATION"). To this end, the direction guiding program may use information provided by a WiFi AP installed at the corresponding subway station.

Then, as illustrated in (B) of FIG. 9, the user device 10 may request the passer-by to input the destination of the passer-by on the screen ("INPUT DESTINATION").

Then, as illustrated in (C) of FIG. 9, the passer-by may input his or her destination to the user device 10 (PoI 252). In the example of (C) of FIG. 9, the destination may be the PoI 252 illustrated in FIG. 4.

Then, as illustrated in (D) of FIG. 9, the user device 10 proposes to go to a subway gate G232 of the subway station on the screen ("GO TO SUBWAY GATE G232")) in order to go to the destination PoI 252. The subway gate to go out may be determined by separate algorithms. The algorithms are not necessarily included in all inventions in the present specification.

Then, as illustrated in (E) of FIG. 9, the user device 10 requests the passer-by to photograph an arbitrary marker 1 near the passer-by on the screen ("TAKE PICTURE OF ANY GUIDE MARK!"). At this time, the content to pass through the subway gate G232 ("DESTINATION VIA G232") to get to the destination PoI 252 may be continuously displayed until the direction guiding is finished.

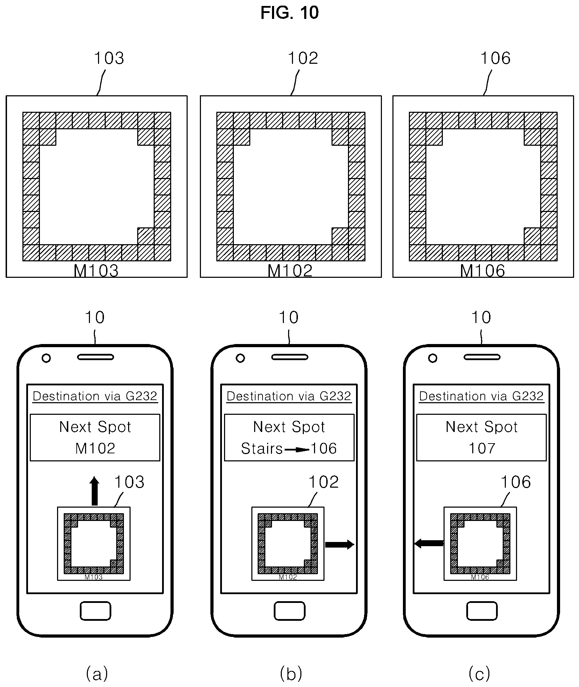

FIGS. 10 to 12 illustrate a process of the passer-by finding the subway gate G232 to go out while photographing the markers 1, based on the contents illustrated in FIGS. 2 to 4.

Hereinafter, description will be made with reference to FIGS. 2 to 4 and FIGS. 10 to 12 together.

After the passer-by gets off at the asterisk point in FIG. 2, all the processes illustrated in FIG. 9 may be performed.

Then, the passer-by may follow the route P1 of FIG. 2 to get to a marker 103 installed closest to his or her getting-off position.

Then, the passer-by may photograph the marker 103 by using the direction guiding program. Then, as illustrated in (A) of FIG. 10, the direction guiding program displays the marker 103 on the screen, and indicates which direction to go based on the marker 103 with an arrow. The arrow may correspond to the route P2 illustrated in FIG. 2. Based on the relative relationship between the marker 103 displayed on the screen and the arrow, the passer-by may determine which direction to go based on the marker 103 installed on the floor. As will be described later, which direction the arrow points to based on the marker 103 displayed on the screen is associated with the subway gate (here G232), which has been made determined as the gate to go out. Then, the direction guiding program may present a marker 102 as the next moving location.

Then, the passer-by standing at the marker 103 in FIG. 2 may move to the marker 102 along the route P2 indicated by the arrow.

Then, the passer-by may photograph the marker 102 by using the direction guiding program. Then, as illustrated in (B) of FIG. 10, the direction guiding program may display the marker 102 on the screen, and indicate which direction to go based on the marker 102 with an arrow. The arrow may correspond to the route P3 illustrated in FIG. 2. Based on the relative relationship between the marker 102 displayed on the screen and the arrow, the passer-by may determine which direction to go based on the marker 102 installed on the floor. Then, the direction guiding program may present the stairs 211 and a marker 106 as the next moving location.

Then, the passer-by standing at the marker 102 in FIG. 2 may pass the stairs 211 and move to the marker 106 along the route P3 indicated by the arrow.

Then, the passer-by may photograph the marker 106 by using the direction guiding program. Then, as illustrated in (C) of FIG. 10, the direction guiding program may display the marker 106 on the screen, and indicate which direction to go based on the marker 106 with an arrow. The arrow may correspond to the route P4 illustrated in FIG. 3. Based on the relative relationship between the marker 106 displayed on the screen and the arrow, the passer-by may determine which direction to go based on the marker 106 installed on the floor. Then, the direction guiding program may present a marker 107 as the next moving location.

Then, the passer-by standing at the marker 106 in FIG. 3 may move to the marker 107 along the route P4 indicated by the arrow.

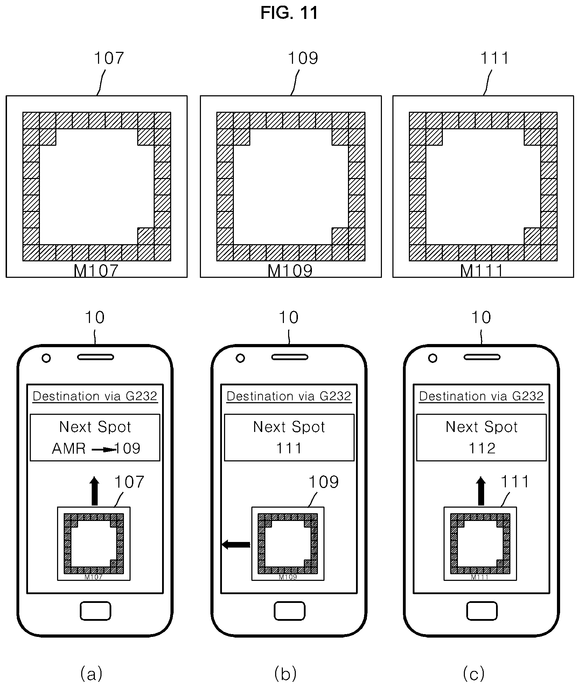

Then, the passer-by may photograph the marker 107 by using the direction guiding program. Then, as illustrated in (A) of FIG. 11, the direction guiding program may display the marker 107 on the screen, and indicate which direction to go based on the marker 107 with an arrow. The arrow may correspond to the route P5 illustrated in FIG. 3. Based on the relative relationship between the marker 107 displayed on the screen and the arrow, the passer-by may determine which direction to go based on the marker 107 installed on the floor. Then, the direction guiding program may present the AMR and a marker 109 as the next moving location.

Then, the passer-by standing at the marker 107 in FIG. 3 may pass the ARM and move to the marker 109 along the route P5 indicated by the arrow.

Then, the passer-by may photograph the marker 109 by using the direction guiding program. Then, as illustrated in (B) of FIG. 11, the direction guiding program may display the marker 109 on the screen, and indicate which direction to go based on the marker 109 with an arrow. The arrow may correspond to the route P6 illustrated in FIG. 3. Based on the relative relationship between the marker 109 displayed on the screen and the arrow, the passer-by may determine which direction to go based on the marker 109 installed on the floor. Then, the direction guiding program may present a marker 111 as the next moving location.

Then, the passer-by standing at the marker 109 in FIG. 3 may move to the marker 111 along the route P6 indicated by the arrow.

Then, the passer-by may photograph the marker 111 by using the direction guiding program. Then, as illustrated in (C) of FIG. 11, the direction guiding program may display the marker 111 on the screen, and indicate which direction to go based on the marker 111 with an arrow. The arrow may correspond to the route P7 illustrated in FIG. 3. Based on the relative relationship between the marker 111 displayed on the screen and the arrow, the passer-by may determine which direction to go based on the marker 111 installed on the floor. Then, the direction guiding program may present a marker 112 as the next moving location.

Then, the passer-by standing at the marker 111 in FIG. 3 may move to the marker 112 along the route P7 indicated by the arrow.

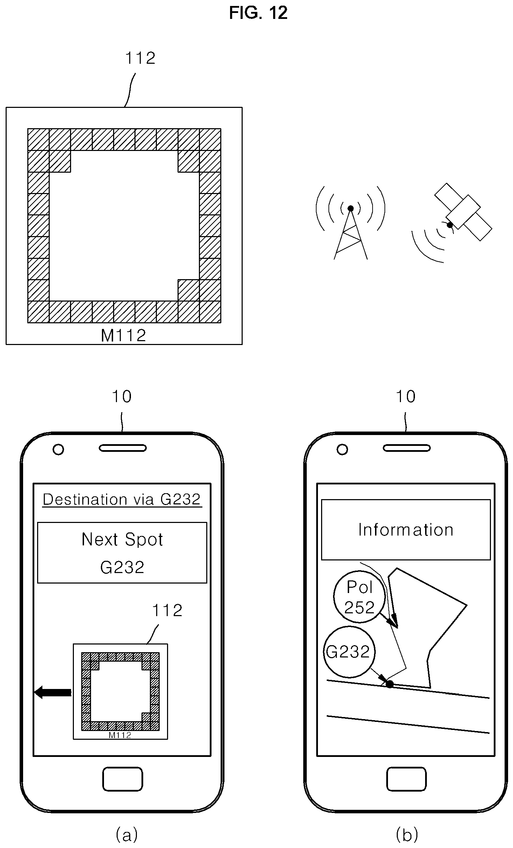

Then, the passer-by may photograph the marker 112 by using the direction guiding program. Then, as illustrated in (A) of FIG. 12, the direction guiding program may display the marker 112 on the screen, and indicate which direction to go based on the marker 112 with an arrow. The arrow may correspond to the route P8 illustrated in FIG. 3. Based on the relative relationship between the marker 112 displayed on the screen and the arrow, the passer-by may determine which direction to go based on the marker 112 installed on the floor. Then, the direction guiding program may present the subway gateway G232 as the next moving location.

Then, the passer-by standing at the marker 112 in FIG. 3 may move to the subway gateway G232 along the route P8 indicated by the arrow.

Then, when the passer-by comes out of the subway station, the user device 10 may receive a GPS signal from a GPS satellite or receive a base station ID from a wireless mobile communication base station. Accordingly, the direction guiding program of the user device 10 may be switched to an existing navigation mode using the GPS and/or the base station ID. The guide route from the subway gate G232 where the passer-by has come out to the destination PoI 252 input by the passer-by may be displayed on a map, and may be presented by an existing navigation algorithm.

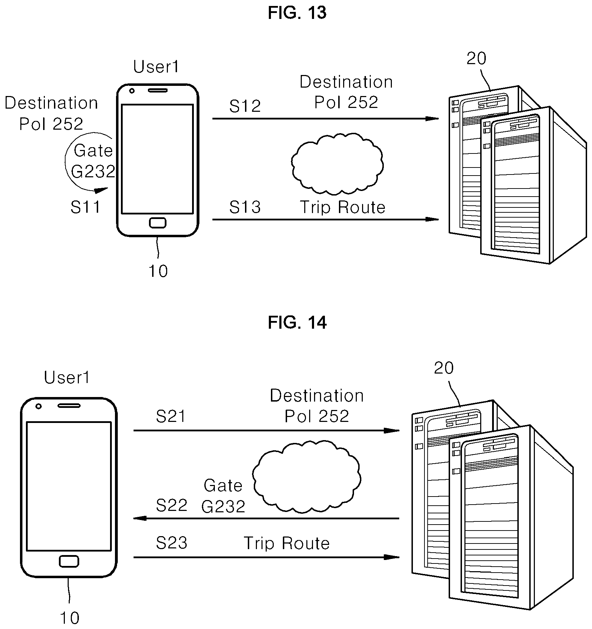

FIG. 13 illustrates information exchanged by communication between the user device 10 and a server 20 according to an embodiment of the present invention.

The user device 10 may be used by a first user USER 1 who is a passer-by carrying the user device.

In step S11, the passer-by may input the destination PoI 252 to the user device 10. In addition, the user device 10 may determine the subway gate G232, which is the most suitable subway gate to reach the destination PoI 252, by using a predetermined algorithm.

In step S12, the user device 10 may transmit the input destination PoI 252 to the server 20 through wireless communication. In this case, information on the determined subway gate G232 may be additionally transmitted.

In step S13, whenever the passer-by uses the user device 10 to photograph the marker 1, the user device 10 may transmit information related thereto to the server 20. In this way, the server 20 may estimate the trip route of the passer-by indoors.

FIG. 14 illustrates information exchanged by communication between the user device 10 and the server 20 according to another embodiment of the present invention.

The user device 10 may be used by a first user USER 1 who is a passer-by carrying the user device.

In step S21, when the passer-by inputs the destination PoI 252 to the user device 10, the user device 10 may transmit the input destination PoI 252 to the server 20 through wireless communication.

In step S22, the server 20 may determine the subway gate G232, which is the most suitable subway gate to reach the destination PoI 252, by using a predetermined algorithm, and may transmit, to the user device 10, information on the determined subway gate G232.

In step S23, whenever the passer-by uses the user device 10 to photograph the marker 1, the user device 10 may transmit information related thereto to the server 20. In this way, the server 20 may estimate the trip route of the passer-by indoors.

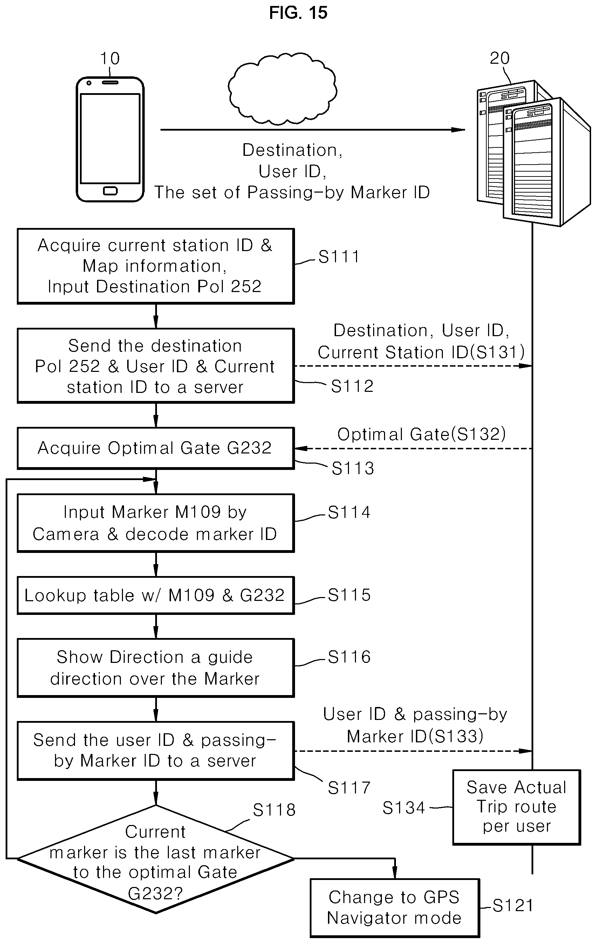

FIG. 15 is a flowchart illustrating a method of performing direction guidance by the direction guiding program of the user device 10 and a method of storing a passer-by passage history, according to an embodiment of the present invention.

In step Sill, the passer-by may input the destination PoI 252 into the direction guiding program of the user device 10. In addition, the user device 10 may acquire a nearby Wi-Fi SSID, or the like, and send it to a remote server, thereby determining the name of a subway station of the current getting-off point by using the remote server.

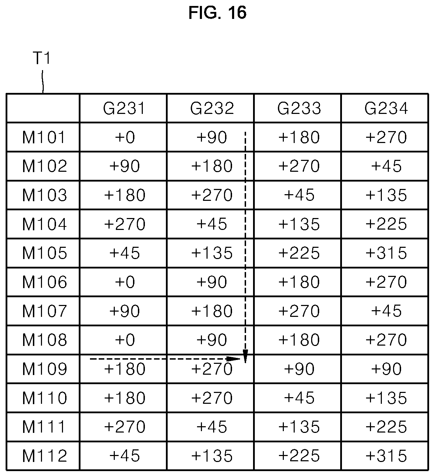

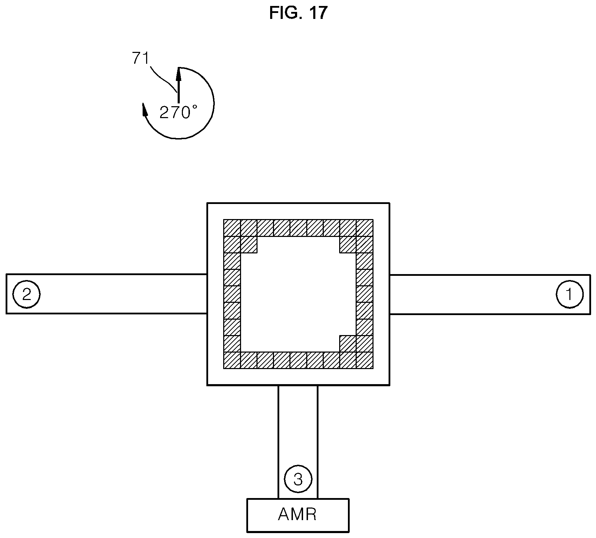

When the user device 10 knows the name of the current subway station, the user device 10 may download and store all information on the markers 1 attached to the subway station from the remote server. An example of information on the markers will be described later with reference to FIGS. 16 and 17 together.

In steps S112 and S131, the user device 10 may send, to the server 20, the input destination PoI 252, the user ID, and the name of the current subway station.

In some cases, even if the user device 10 does not send the name of the current subway station server to the server 20, the server 20 searches for a subway station near the destination PoI 252 and may estimate the current subway station name.

In step S113, the user device 10 may obtain optimal gate information, which is information on the subway gate, which is determined as the most suitable subway gate to go to the destination PoI 252. In the example of FIG. 15, an example in which the optimum gate is the subway gate G232 is given. The algorithm for determining the optimal gate may be performed by the direction guiding program or may be performed by the server 20.

When the algorithm is performed in the user device 10, the user device 10 may utilize the input destination PoI 252 and the determined subway station name.

When the algorithm is performed in the server 20, the server 20 may utilize the input destination PoI 252 sent in step S131 and the determined or estimated subway station name. In addition, the determined optimum gate may be provided from the server 20 to the user device 10 in step S132.

In step S114, the passer-by may use a camera installed in the user device 10 to photograph an arbitrary marker 109 attached indoors and input the image of the marker to the user device 10. In addition, the user device 10 may acquire an identifier of the marker 109 by decoding the image of the marker.

In step S115, the user device 10 may look up the identifier 109 of the photographed marker and information corresponding to the optimum gate G232 from the stored table.

The table may be given, for example, as illustrated in FIG. 16.

FIG. 16 illustrates an example of a table referred to by a user device to express a direction guiding arrow to be superimposed on a marker image, according to an embodiment of the present invention.

Each row of a first table T1 may correspond to each marker, and each column may correspond to each subway gate.

In a cell at the point where the first row corresponding to a first marker and the second column corresponding to a first gate meet, information indicating which direction to move to the first gate based on the first marker is recorded.

In the example of the flowchart shown in FIG. 15, it is necessary to know which direction has to be taken with respect to the marker 109 to go to the optimum gate G232. In the first table of FIG. 16, information about the direction (+270°) is indicated by two dotted arrows.

In the example illustrated in FIG. 16, in each cell of the first table T1, a number is recorded indicating a degree at which the passer-by has to move clockwise from the reference direction 71 of the photographed marker to reach the optimal gate. The number may be presented in degree. However, how to indicate the movement direction may be presented in other ways.

When the marker is actually installed on the indoor floor, the reference direction of the marker is to be installed corresponding to the contents of the table presented in FIG. 16. This process may require attention since the person installing the marker has to proceed with attention. However, when the marker is installed indoors, an automated method for helping to alleviate the need for attention described above may be further developed and presented.

In a modified embodiment, the number presented in each cell of the first table T1 may be a value indicating which direction to move based on a specific direction among east, west, north and south, e.g., a north direction. In this case, the user device 10 may be configured to perform a compass function. In addition, the current direction in which the passer-by is facing may be expressed on the display unit by the compass function. The direction in which the passer-by has to move from the location of the current marker may be expressed based on the displayed guide of the needle of the compass.

FIG. 17 illustrates the marker 109 illustrated in FIG. 3 and three guidelines connected thereto. In order to go from the marker 109 to the gate G232, the movement to the left while looking at the marker 109 in the forward direction is needed. That is, the movement is needed in the direction rotated +270° clockwise around the reference direction 71.

In step S116, the user device 10 may indicate a direction to be moved on the photographed marker 109 as an arrow. In this case, the direction of the arrow may be determined by using the posture of the photographed marker 109 and a value obtained from the first table T1.

In steps S117 and S133, the user device 10 may transmit, to the server 20, the ID of the marker that the passer-by has passed by as a marker photographed together with the user ID.

Then, in step S134, the server 20 may save history information on the subway gate through which a passer-by with a specific ID has gotten out, and markers which the passer-by has followed. The step S134 may be repeatedly performed in the server 20 whenever each passer-by photographs each marker.

In step S118, the user device 10 checks whether the currently photographed marker is the last marker heading to the last gate G232.

When the currently photographed marker is the last marker, it is expected that the passer-by will go to the ground. Accordingly, the direction guiding program of the user device 10 is switched to an existing navigation mode using GPS.

In contrast, when the currently photographed marker is not the last marker, the process returns to step S114.

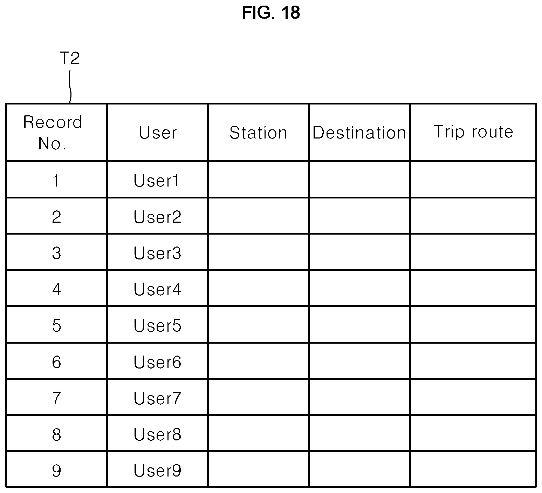

FIG. 18 is a diagram illustrating that the server 20 may store a trip route history of each passer-by as a table, according to an embodiment of the present invention.

The server 20 may generate a second table T2 through the step S134. The second table T2 may store a subway station along the route on which each passer-by has moved, a destination, and the markers in the subway station and on the route to the destination, in a linear arrangement.

In the above description, it is assumed that the destination is a specific point on the ground; however, a specific entrance gate of a subway station may be set as the destination.

By using the embodiments of the present invention described above, those skilled in the technical field to which the present invention belongs could easily implement various changes and modifications without departing from the scope of the essential characteristics of the present invention. Features of each claim in Claims may be incorporated into other claims that do not depend on or are not depended on by the claim, within the scope that could be understood upon reading the present specification.

## Claims

1. A direction guiding method comprising:
acquiring, by a user device (10), information (PoI 252 or G232) on a first arrival location to be reached by a passer-by;
recognizing, by the user device, a first marker (1) on which identifying information is recorded by photographing the first marker; and
outputting, by the user device, a first direction in which the passer-by is to move for the passer-by to move to the first arrival location.

2. The direction guiding method of claim 1, further comprising displaying the photographed first marker on a display unit.

3. The direction guiding method of claim 1, wherein the user device is configured to, in the outputting of the first direction, present the first direction together with the photographed first marker based on the photographed first marker as a reference, present the first direction together with east, west, north, and south direction information, or present the first direction based on a third reference direction.

4. The direction guiding method of claim 1, wherein the user device is configured to output information on the first direction on the display unit as a video signal, or output the information on the first direction as an audio signal.

5. The direction guiding method of claim 1, wherein identifiers of a plurality of markers, identifiers of a plurality of arrival locations to be reachable by the passer-by, and marker-arrival location combination information (T1) on a plurality of directions allocated for combinations of each of the markers and each of the arrival locations are stored in a storage unit of the user device, during at least a portion of a time in which the direction guiding method is performed.

6. The direction guiding method of claim 5, wherein the outputting of the first direction comprises: searching for a direction corresponding to the combination of the first marker and the first arrival location among the plurality of directions included in the marker-arrival location combination information; and determining the searched direction as the first direction.

7. The direction guiding method of claim 2, wherein the first marker has a shape in which a unique reference direction is to be defined, and the outputting of the first direction comprises: determining a reference direction of the first marker; and displaying the first direction together with the first marker based on the determined reference direction.

8. The direction guiding method of claim 1, wherein the user device performs a compass function, and the outputting of the first direction comprises displaying the first direction based on a predetermined reference direction among east, west, north, and south.

9. A generation method for a trip route history of a passer-by, the generation method comprising:
acquiring, by a user device (10), information (PoI 252 or G232) on a first arrival location to be reached by a passer-by;
performing a direction guiding process on a plurality of different markers, the direction guiding process being performed by the user device for recognizing a marker (1) on which identifying information is recorded by photographing the marker, transmitting, to a server, marker information which is information on the marker, and outputting a first direction in which the passer-by is to move for the passer-by to move to the first arrival location; and
generating, by the server, a trip route history of the passer-by by using the marker information on a plurality of markers received from the user device.
